# FASCICULE DE BREVET EUROPEEN

(11) **EP 2 227 372 B1**
(45) Date de publication et mention de la délivrance du brevet: **20.06.2018**
(21) Numéro de dépôt: 08849672.4
(22) Date de dépôt: 12.11.2008
(51) Int. Cl.: B29C 65/12, C09J 123/08

(54) **CORDON DE SOUDURE POUR REVETEMENT DE SOL**
SCHWEISSDRAHT ZUR BODENVERKLEIDUNG
WELDING ROD FOR FLOORING

(30) Priorité: 14.11.2007 EP 07022062
(43) Date de publication de la demande: 15.09.2010
(73) Titulaire: Tarkett SAS, 92478 Nanterre Cedex (FR)
(72) Inventeur: BASTIN, Pierre, L-9559 Wiltz (LU); PERES, Richard, B-6600 Bastogne (BE); ROELLY, Nicolas, F-67420 Plaine (FR)
(74) Mandataire: Pronovem
(86) Numéro de dépôt international: PCT/EP2008/065397
(87) Numéro de publication internationale: WO 2009/062962

(56) Documents cités:
- EP-A1- 0 969 068
- WO-A-2004/067668
- GB-A- 1 440 810
- GB-A- 2 321 059
- GB-A- 2 322 097
- US-A- 4 791 164
- US-A- 5 753 767
- DATABASE WPI Week 200064 Thomson Scientific, London, GB; AN 2000-660760 XP002476177 -& JP 2000 280349 A (TAKIRON KK) 10 octobre 2000 (2000-10-10)
- DATABASE WPI Week 200525 Thomson Scientific, London, GB; AN 2005-236240 XP002407749 -& JP 2005 054001 A (TAKIRON KK) 3 mars 2005 (2005-03-03)

## Description

### Objet de l'invention

La présente invention se rapporte à un cordon de soudure thermofusible pour revêtements de sol, et à l'utilisation d'un tel cordon de soudure avec des revêtements de sol.

### Etat de la technique

Pour la décoration intérieure ou extérieure d'une surface, par exemple d'un bâtiment ou d'une habitation, on utilise généralement des revêtements de surface décoratifs car ils s'avèrent être plus agréables, plus esthétiques et plus confortables, qu'une surface nue ou simplement peinte. Les revêtements de surface sont bien connus. Généralement, il s'agit, par exemple, de revêtements de surface à base de polyoléfines, à base de polychlorure de vinyle (PVC), à base de linoléum ou à base de caoutchouc.

Habituellement, les revêtements de surface, et en particulier les revêtements de sol, se trouvent sous la forme d'éléments, de lés ou de dalles, qui, une fois posés et/ou fixés sur la surface à décorer, doivent être interconnectées, ou scellées, les uns aux autres. L'utilisation d'un cordon de soudure thermofusible, pour connecter ou souder les éléments de revêtement de sol, est par ailleurs bien connue.

Classiquement, le cordon de soudure thermofusible, qui est généralement un cordon cylindrique, est introduit dans la buse de soudure d'un chalumeau à air chaud qui chauffe le cordon de soudure et lui permet de pénétrer dans l'interstice formé par des éléments de revêtements de sol adjacents. Une fois refroidi, l'excès de cordon est ensuite arasé à l'aide d'un couteau quart de lune.

Les cordons de soudure thermofusibles sont habituellement des cordons à base de polymère ou copolymère ayant un pouvoir collant à des températures plus basses que celles des compositions des éléments de revêtements.

Un cordon de soudure thermofusible pour revêtements de sol doit répondre à de nombreux critères souvent antagonistes dans la mesure où les caractéristiques nécessaires pour une pose facile sont opposées à celles nécessaires pour un entretien facile.

C'est ainsi que pour une pose facile au moment de la soudure, la composition polymérique du cordon de soudure doit avoir une faible viscosité à chaud, il doit avoir une polarité élevée et une habilité à coller importante sans avoir un toucher « glissant ». Ensuite, une fois refroidi, pour araser le surplus de cordon, la résistance mécanique de la composition du cordon à la découpe doit être relativement faible et le « retour élastique » doit être faible. Le cordon de soudure doit avoir une bonne adhérence aux éléments qu'il doit joindre et une bonne résistance à l'arrachement.

Pour un entretien facile, la composition du cordon, une fois posé, doit par contre avoir une viscosité élevée pour présenter une résistance élevée à l'abrasion, il doit être flexible, et donc, avoir un bon retour élastique. Il doit présenter une faible polarité et habilité à coller pour ne pas accrocher les salissures. Il doit donc être suffisamment collant pour sceller les éléments du revêtement de sol, mais pas trop pour que la salissure (poussière, graisse, ou autre) n'y adhère pas, et pour ne pas adhérer à la buse de soudure d'un chalumeau à air, ni aux parties métalliques du dispositif d'extrusion ou d'injection lors de sa fabrication. Ceci signifie qu'il fallait une composition qui changeait partiellement ses caractéristiques en refroidissant et en se recristallisant partiellement.

Par ailleurs, la plupart des revêtements de surface actuels subissent un traitement de surface à base de polyuréthane ou d'acrylique, qui forme un vernis de protection sur lequel peu de choses adhèrent et qui rend ces revêtements résistant à la salissure et aux agressions mécaniques. Ceci complique sensiblement le fait de vouloir concilier les différentes caractéristiques discutées au paragraphe précédent, puisque des critères, tels que la résistance à la salissure, doivent être remplis et comparés avec des surfaces vernies alors que le cordon de soudure ne bénéficie pas d'un tel vernis de protection.

Les cordons de soudure de l'état de la technique utilisés pour de tels revêtements ne satisfont pas aux critères de résistance aux agressions mécaniques et aux salissures auxquels ces nouveaux revêtements satisfont. En effet, afin de coller efficacement les éléments d'un revêtement recouvert d'un vernis de protection, les cordons de soudure doivent être très collants. Pour cela, lesdits cordons contiennent habituellement une forte proportion de composés appelés « tackifiants ».

Les tackifiants sont des composés de nature très diverses, qui permettent d'augmenter les propriétés d'adhésion, et d'augmenter l'effet « collant au toucher », de la composition dans laquelle ils sont incorporés. Ce sont généralement des polymères thermoplastiques amorphes de faible poids moléculaire, dérivés de monomères synthétiques ou naturels.

Or, en rendant le cordon très collant pour des éléments de revêtement de surface recouvert d'un vernis de protection, l'emploi de fortes proportions de tackifiants rend le cordon de soudure, non seulement plus difficile à araser, mais également très collant à l'égard des salissures, et ainsi très sensible à l'encrassement. De ce fait, le cordon de soudure vieillit plus rapidement que les éléments de revêtement de surface qu'il joint. Il prend une couleur plus foncée et, par conséquent, contraste fortement avec le revêtement (en particulier si le revêtement comprend un décor), ce qui contribue à rendre le revêtement inesthétique. De plus, même un nettoyage poussé à l'aide d'un solvant ne permet pas de redonner au cordon de soudure son aspect initial.

Le document WO 2007/009733 décrit un cordon de soudure pour des recouvrements décoratifs, à base d'éthylène-vinyle acétate (EVA) et d'au moins une cire naturelle. La composition comprend 40 à 75% en poids d'EVA et présente un indice de fluidité compris entre 2g/10 min et 150g/10 (mesuré selon la norme ASTM 1238).

Pour des cordons à base d'EVA, il est généralement bien connu que, pour augmenter le pouvoir collant de telles compositions, il est nécessaire d'y additionner des composés tackifiants. Cependant, ces tackifiants présentent l'inconvénient majeur de dégrader fortement la résistance mécanique et la résistance à la salissure de tels cordons.

Le document GB 2 321 059 décrit par ailleurs un cordon de soudure thermofusible pour revêtement de sol qui comprend 3 à 25% en poids d'un mélange de poly vinyle butyral (PVB) et d'un polymère ayant un noyau polaire pouvant former des liaisons hydrogènes avec le PVB. Le cordon de soudure peut être produit par extrusion ou calandrage de la composition car elle ne colle pas aux parties métalliques des dispositifs d'extrusion ou de calandrage, néanmoins cette composition présente l'inconvénient de ne pas être adaptée aux revêtements de surface recouverts d'un vernis de protection.

Le document JP 2005-54001 décrit quant à lui une composition pour cordon de soudure comprenant une cire polyoléfinique (A) ayant un indice de fluidité entre 1 et 50g/10min, ladite cire (A) pouvant être à base d'un copolymère d'éthylène-acrylate d'éthyle, d'éthylène-acrylate de méthyle ou d'éthylène-métacrylate de méthyle, une cire (B) identique à la cire A, mais avec un indice de fluidité de 1 à 100g/10min, et/ou un élastomère thermoplastique (C), une cire (D) qui peut être une cire de polyéthylène ou d'un ionomère, et une résine (E) tackifiante.
Le document US 4791164 décrit un adhésif thermofusible comprenant un mélange compatible d'au moins un polyamide à base d'un dimère d'acides gras et d'au moins un copolymère ou terpolymère à base d'éthylène. Un procédé de fabrication de l'adhésif thermofusible et un procédé pour l'utilisation de celui-ci pour adhérer à des matières plastiques et à des métaux sont aussi décrits.

### Buts de l'invention

La présente invention propose un cordon de soudure thermofusible pour revêtements de sol qui ne présente pas les inconvénients de l'état de la technique.

Elle vise à fournir un cordon de soudure thermofusible qui a une bonne adhérence aux éléments de revêtements de sol qu'il doit joindre même lorsque ceux-ci sont recouverts des vernis anti-griffes et antisalissure. Le cordon selon l'invention doit être d'une mise en oeuvre aisée, et une fois posé, doit être facilement arasable.

Elle vise également à fournir un cordon de soudure thermofusible qui, une fois posé, refroidi et arasé, présente une bonne résistance à l'abrasion, aux griffes et aux salissures, et qui est facile d'entretien.

Elle vise de plus à fournir un cordon de soudure thermofusible utilisable pour tout type de revêtement de sol.

### Résumé de l'invention

La présente invention décrit un cordon de soudure thermofusible pour joindre des éléments de revêtement de sol selon la revendication 1.

Selon des formes particulières de réalisation de l'invention, celle-ci comporte l'une ou une combinaison quelconque de plusieurs des caractéristiques suivantes :
- le copolymère, choisi parmi le groupe formé par les polymères à base d'acide acrylique, d'acide méthacrylique et d'anhydride maléique, est partiellement ou entièrement neutralisé pour former un ionomère,
- le copolymère, à base d'acide acrylique ou d'acide méthacrylique, comporte un taux d'acide entre 10% et 20% en poids par rapport au poids total des autres co-monomères,
- le copolymère, à base d'acide acrylique ou d'acide méthacrylique, comporte un taux d'acide de 10% en poids par rapport au poids total des autres co-monomères,
- le copolymère, à base d'anhydride maléique, a un taux d'anhydride compris entre 1,3% et 3,1% en poids par rapport au poids total des autres co-monomères,
- le copolymère, choisi parmi le groupe formé par les polymères à base d'acide acrylique, d'acide méthacrylique et d'anhydride maléique, est un terpolymère,
- le copolyamide a un indice d'amine supérieur à l'indice d'acide,
- le cordon de soudure comprend en outre une cire de carnauba ou une cire de paraffine,

La présente invention décrit également un revêtement de sol comportant une soudure réalisée avec le cordon de soudure thermofusible selon l'invention.

La présente invention divulgue l'utilisation du cordon de soudure thermofusible selon l'invention pour joindre des éléments de revêtement de sol choisis parmi le groupe formé par les revêtements de sol à base de polyoléfine, les revêtements de sol à base de PVC, les revêtements de sol à base de Linoléum, et les revêtements de sol à base de caoutchouc.

On entend par « copolyamide » un composé résultant de la condensation d'un dimère d'acide gras et d'une diamine aliphatique. De préférence, le dimère d'acide gras est obtenu par un procédé de dimérisation d'acides gras insaturés d'origine végétale. Néanmoins, la nature et les méthodes d'obtention du copolyamide utilisable dans le cordon de soudure selon l'invention peuvent également être celles décrites dans le document WO 2004/067668.

On entend par « cire » un polymère ayant une viscosité Brookfield inférieure à 10000 mPa.s (10000 cPoises ; 1 mPa.s = 1 cPoise ; cPoises signifiant centipoises) à 140°C.

Pour un polymère portant des fonctions acides, l'« indice d'acide » (nombre de neutralisation, équivalent ou acidité) correspond au poids en milligrammes d'hydroxyde de potassium (KOH) nécessaire pour neutraliser un gramme du polymère (mg KOH/g). Cet indice d'« acide » permet de quantifier la quantité de groupements acide carboxylique dans un composé acide. De même, l'indice d'« amine » d'un polymère basique correspond à la quantité en milligrammes d'hydroxyde de potassium KOH équivalente au nombre de groupements amine présent dans un gramme de polymère (mg KOH/g), et permet de quantifier la basicité d'un composé chimique. Habituellement, la détermination de ces indices s'effectue selon une méthode standard (ASTM D 974).

### Brève description des figures

La figure 1 représente un cordon de soudure thermofusible selon l'invention conditionné sous forme d'un rouleau.
La figure 2 représente différents cordons de soudure thermofusible.
La figure 3 représente un cordon de soudure thermofusible introduit dans une buse de soudure d'un chalumeau à air chaud.
La figure 4 représente un cordon de soudure de l'état de la technique après un test de salissure et de nettoyage.
La figure 5 représente un cordon de soudure selon l'invention après un test de salissure et de nettoyage.

### Description détaillée de l'invention

Comme cela a été mentionné plus haut, un cordon de soudure thermofusible pour un revêtement de sol, recouvrant par exemple le sol d'un bâtiment quelconque ou d'un véhicule quelconque, doit concilier de nombreux critères qui ne sont différent selon que l'on veuille obtenir une facilité de pose et/ou un entretien aisé par la suite.

Pour ce qui concerne l'amélioration de l'adhésion (qui doit permettre une jointure parfaite des éléments de revêtement de sol à joindre) et de la facilité d'arasement, on pourrait supposer que le cordon de soudure doive comprendre des polymères à faibles poids moléculaire, voire de très faible poids moléculaire. Néanmoins, concernant les caractéristiques de résistance aux agressions mécaniques (résistance à la griffe par exemple), de la résistance aux salissures, et la flexibilité (ou l'élasticité), on pourrait supposer que le cordon de soudure doive comprendre des polymères de poids moléculaires plus élevés.

De plus, afin d'avoir une meilleure adhésion, il est nécessaire que la composition du cordon de soudure comporte des groupements polaires, alors que pour améliorer le comportement du cordon de soudure vis-à-vis des tâches et des salissures, il faut privilégier une composition apolaire.

### Tests d'évaluation

Les différentes compositions de cordon ont été évaluées dans un test d'adhérence, des tests de salissures, de goudron et de griffure.

Le test de salissure consiste à déposer une poudre abrasive sur le cordon de soudure arasé et à salir ledit cordon de soudure à l'aide d'un chiffon en coton par un mouvement de va-et-vient (10 aller-retour) effectué sur le cordon de soudure avec une force comprise entre 40 et 50N. L'excès de poudre abrasive est ensuite retiré. Le nettoyage du cordon de soudure s'effectue à sec, sur la zone encrassée, à l'aide d'un chiffon propre en coton. La même opération de nettoyage est également effectuée à l'aide d'un chiffon propre en coton préalablement humidifié par de l'eau. Le niveau d'encrassement du cordon est ensuite évalué sur une échelle allant de « 1 », signifiant très fortement encrassé, à « 10 » signifiant aucune trace d'encrassement. Les valeurs obtenues après nettoyage à sec et à l'eau sont toujours données les unes à côté des autres.

La poudre abrasive utilisée dans le test de salissure peut être de toute composition adéquate. A titre d'exemple, la composition de poussière utilisée pour les tests comparatifs des différentes compositions de cordon de soudure est : 38,85% de poussière de tourbe, 17,45% de ciment Portland, 17,7% de Kaolin, 17,7% de Quartz, 6,2% d'huile minérale Nujol Q14, 0,6% d'oxyde ferrique, 1,5% de pigment jaune.

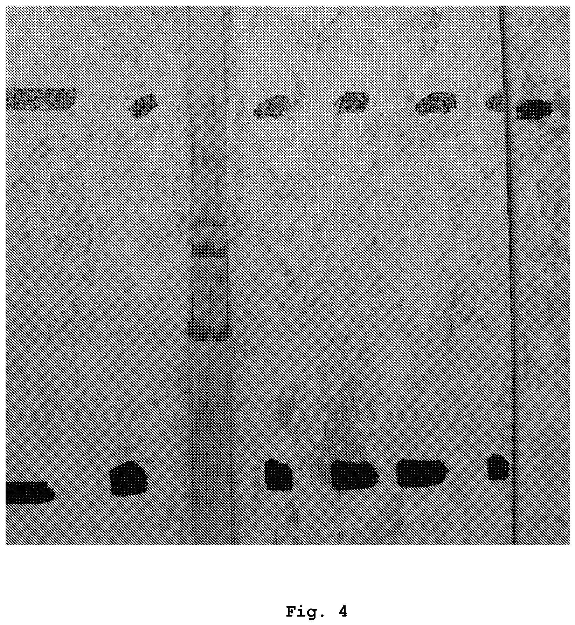

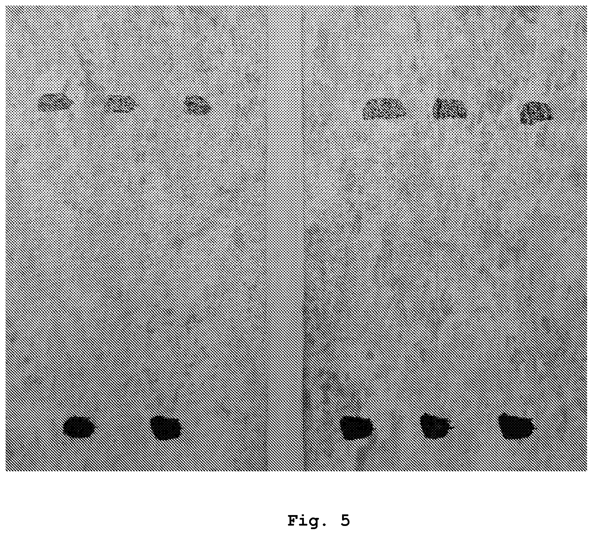

Le test du goudron consiste à mettre une goutte de goudron liquide au contact de la surface à évaluer. Après une demi-heure d'exposition, le goudron est enlevé à l'aide d'un chiffon et l'excédent de goudron est retiré à l'aide d'un chiffon imbibé d'isopropanol. Le changement de couleur du cordon de soudure est alors apprécié selon l'échelle suivante : « 1 » signifie qu'il n'y a pas de différence (retour à la couleur initiale) (figure 5), « 2 » signifie qu'un léger brunissement est observable, « 3 » signifie que le cordon de soudure a un aspect brun à l'endroit du dépôt du goudron, « 4 » et « 5 » signifient que le cordon de soudure a un aspect qui va de brun foncé à noir (figure 4).

Le test d'adhérence a été réalisé sur un revêtement de sol à base de linoléum, qui représente les conditions d'adhérence les plus difficiles car, le linoléum n'étant pas « thermoplastique », les adhésions ne peuvent se faire que par accrochage mécanique et par des interactions polaires via des interactions physiques ou via des « interactions chimiques » entre la surface du linoléum et la surface du cordon à souder.

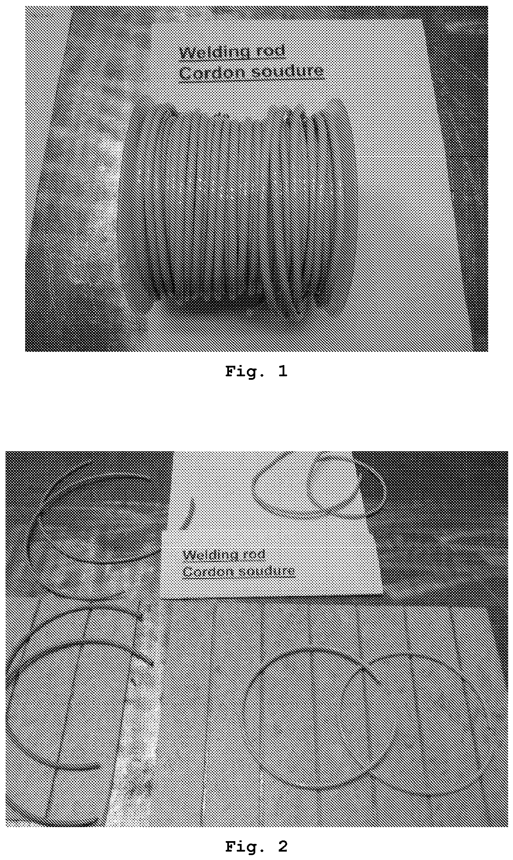

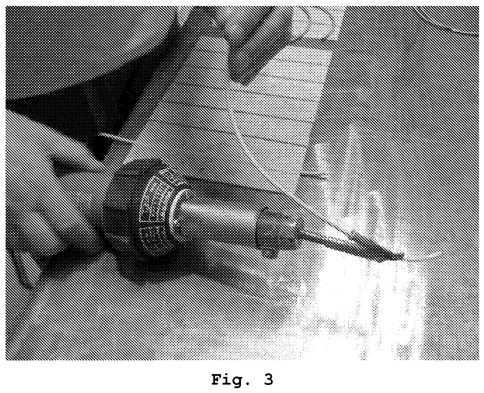

Le test d'adhérence consiste à couper un échantillon de revêtement de sol, à l'aide d'un chanfrein muni d'un couteau, sur toute son épaisseur (y compris la toile de jute dans le cas d'un linoleum). Les deux éléments de revêtement de sol ainsi obtenus, et devant servir aux tests, sont séparés par environ 3 mm, un espace maintenu constant afin de pouvoir réaliser des comparaisons. Le cordon de soudure à tester (figures 1 et 2) est déposé dans cet espace à l'aide d'un « Leister® », ou chalumeau à air chaud (figure 3), afin de souder les deux éléments du revêtement de surface. Après le refroidissement du cordon de soudure, la matière en excédent est arasée, puis la force nécessaire pour séparer les revêtements assemblés est mesurée à l'aide d'un extensomètre. Les mesures de force sont effectuées sur des échantillons ayant 5 cm de large (et donc 5 cm de soudure), la soudure étant perpendiculaire au sens de traction. Les valeurs d'adhérence, ainsi mesurées, sont exprimées en Newton par 50 mm de large (N/50 mm).

Le test de griffe, ou test du scléromètre, consiste à enfoncer verticalement une pointe abrasive d'un diamètre bien définie (de l'ordre de 1 mm) à l'aide d'un ressort, gradué en grammes, sur la surface dont on souhaite mesurer la résistance à la griffe. On impose alors le glissement de la pointe abrasive horizontalement le long de la surface et l'aspect de la surface (sa dégradation) est alors observé. Il n'est pas toujours possible d'évaluer précisément la force à laquelle la surface est altérée, c'est pourquoi, il a été choisi de mesurer la force à partir de laquelle l'apparition de « vagues » peut être observée, des « vagues » qui correspondent à un début de dégradation du cordon de soudure sous la forme de déchirures superficielles. En effet, cette zone de « vagues » est beaucoup plus facile à déterminer, et de plus, il s'avère que les valeurs ainsi obtenues ont une excellente reproductibilité.

Pour pouvoir comparer les performances du cordon selon la présente invention avec ceux de l'état de la technique nous avons réalisés des exemples comparatifs avec différentes compositions à base d'EVA (éthylène - acétate de vinyle). Nous avons ensuite testés leur résistance à la griffure et à la salissure. Les tableaux 1 à 3 présentent de telles compositions. La proportion des additifs dans les différentes compositions (TiO₂ dans les exemples) est donnée en pourcentage par rapport au(x) polymère(s) de base (pcr).

### Composition des cordons de soudure selon l'état de la technique (exemples comparatifs)

**Tableau 1 : Compositions de cordon de soudure de l'état de la technique avec une base d'EVA.**

| **Composition** | **1** | **2** | **3** | **4** | **5** | **6** | **7** | **8** |
|---|---|---|---|---|---|---|---|---|
| EVA - 1 | 100 | | 70 | 70 | | | 70 | 70 |
| EVA - 2 | | 100 | | | 85 | 85 | | |
| Cire PE-1 | | | | | | 15 | 15 | |
| Cire PE-2 | | | 15 | 15 | 15 | | | 15 |
| Tackifiant naturel | | | 15 | | | | | 15 |
| Tackifiant synthétique | | | | 15 | | | 15 | |
| TiO₂ | 3,5 | 3,5 | 3,5 | 3,5 | 3,5 | 3,5 | 3,5 | 3,5 |

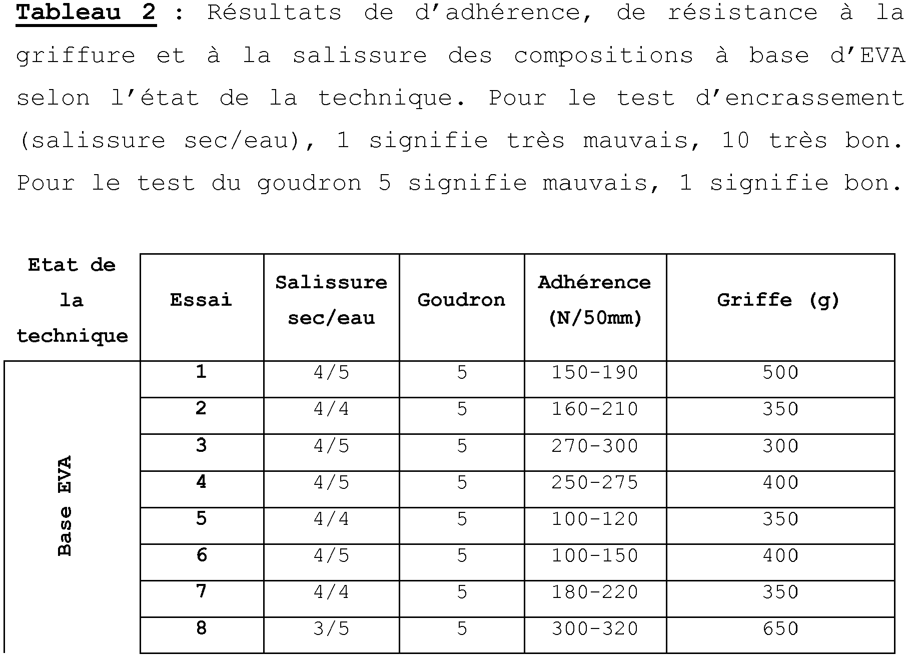

Comme le montre le tableau 2, les cordons de soudure à base d'EVA présentent une faible adhérence et des résistances aux salissures, au goudron et à la griffure, globalement médiocres. L'addition de cire PE (compositions 5 à 7) et de tackifiants (compositions 3, 4, 7 et 8) permet d'améliorer l'adhérence, mais pas d'améliorer la résistance à la griffure ou aux salissures.

### Composition des cordons de soudure selon l'invention

Des compositions selon l'invention comprenant un ou plusieurs polymères à base d'acide ou d'anhydride, éventuellement partiellement neutralisés en ionomère, ont été alors élaborées, puis testées pour leur résistance mécanique et aux salissures dans les mêmes conditions que celles utilisées pour l'évaluation des compositions à base d'EVA selon l'état de la technique.

**Tableau 3 : Compositions de cordon de soudure avec une base d'environ 60 % de polyéthylène. Les compositions 9 à 13 ne sont pas selon l'invention telle que revendiquée.**

| **Composition** | **9** | **10** | **11** | **12** | **13** |
|---|---|---|---|---|---|
| LDPE - 1 | 57,5 | 57,5 | 45,0 | 45,0 | 65,0 |
| Cire PE - 1 | 15,0 | 15,0 | 15,0 | 15,0 | 15,0 |
| Ionomère | | 12,5 | | 25,0 | 5,0 |
| EMAA - 2 | 12,5 | | 25,0 | | |
| PA - 1 | 15,0 | 15,0 | 15,0 | 15,0 | 15,0 |
| TiO₂ | 3,5 | 3,5 | 3,5 | 3,5 | 3,5 |

**Tableau 4 : Compositions de cordon de soudure comprenant des copolymères acides en totalité ou alternativement avec 15 % de tackifiant. Les compositions 14 à 19 ne sont pas selon l'invention telle que revendiquée.**

| **Composition** | **14** | **15** | **16** | **17** | **18** | **19** |
|---|---|---|---|---|---|---|
| EMAA - 1 | 100 | | | 85 | | |
| EMAA - 2 | | 100 | | | 85 | |
| EMAA - 3 | | | 100 | | | 85 |
| Tackifiant synthétique | | | | 15 | 15 | 15 |
| TiO₂ | 3,5 | 3,5 | 3,5 | 3,5 | 3,5 | 3,5 |

**Tableau 5 : Compositions de cordon de soudure comprenant 70% de copolymères acides en combinaison avec une cire PE et/ou un ionomère et/ou un tackifiant et/ou un copolyamide. Les compositions 20 et 21 ne sont pas selon l'invention telle que revendiquée.**

| **Composition** | **20** | **21** | **22** | **23** |
|---|---|---|---|---|
| EMAA - 2 | 70 | | 70 | 70 |
| EAA - 1 | | 70 | | |
| Cire PE - 1 | 15 | 15 | 15 | 15 |
| Tackifiant synthétique | 15 | 15 | | |
| PA - 1 | | | 15 | |
| PA - 2 | | | | 15 |
| TiO₂ | 3,5 | 3,5 | 3,5 | 3,5 |

**Tableau 6 : Compositions de cordon de soudure de copolymères acides ou anhydrides en combinaison avec le copolyamide (le polyamide est exprimé en partie en poids par rapport à 100 parties en poids des autres polymères). Les compositions de cordon de soudure 25, 26 et 28 à 33 sont selon l'invention.**

| **Composition** | **24** | **25** | **26** | **27** | **28** | **29** | **30** | **31** | **32** | **33** |
|---|---|---|---|---|---|---|---|---|---|---|
| EVA - 1 | | | | | | 11,0 | 22,0 | | | |
| EMAA - 1 | | | 61,0 | 63,5 | 74,0 | 63,0 | 52,0 | 50,0 | 39,0 | 70,0 |
| EMAA - 2 | 61,0 | 70,0 | | | | | | | | |
| Terpolymère acide | | | | | | | | 11,0 | 21,0 | |
| Cire PE - 1 | | 15,0 | 13,0 | 13,5 | 13,0 | 13,0 | 13,0 | 13,0 | 13,0 | 15,0 |
| Cire PE - 2 | 13,0 | | | | | | | | | |
| Ionomère | | | 13,0 | 13,5 | | | | 13,0 | 13,0 | |
| Tackifiant naturel | 26,0 | | | | | | | | | |
| PA - 1 | | 15,0 | 13,0 | 9,5 | 13,0 | 13,0 | 13,0 | 13,0 | 13,0 | 15,0 |
| TiO₂ | 3,5 | 3,5 | 3,5 | 3,5 | 3,5 | 3,5 | 3,5 | 3,5 | 3,5 | 3,5 |

**Tableau 7 : Compositions de cordon de soudure selon l'invention à base d'EMAA additionné de terpolymères, de polyéthylène et de cires d'ionomère ou de copolyamide.**

| **Composition** | MFI (g/10 min) 190°C 2,16 kg | Viscosité Brookfield (cPoises) | **34** | **35** | **36** |
|---|---|---|---|---|---|
| EMAA-1 | 450 | | 40 | 40 | 40 |
| Cire PE - 1 | | 180 (140°C) | 13 | 13 | 13 |
| Terpolymère anhydride-1 | 5 | | | 21 | |
| Terpolymère anhydride-2 | 7 | | | | 21 |
| Terpolymère acide | 35 | | | | |
| EVA - 1 | 20 | | 21 | | |
| Ionomère | | 80000 (190°C) | 13 | 13 | 13 |
| PA - 1 | | 18000 (200°C) | 13 | 13 | 13 |
| TiO₂ | | | 3,5 | 3,5 | 3,5 |

### Exemples de polymères utilisés dans les tableaux précédents

Par exemple, l'EMAA-1 peut être le Nucrel 599 de Dupont, l'EMAA-2 le Nucrel 699 de DuPont et l'EMAA-3 le Nucrel 2940 de DuPont.

L'EAA-1 peut être le Primacor 5980I de la société Dow ou le Nucrel 2806 de DuPont.

Le tackifiant synthétique peut être de l'Escorez 5340 d'ExxonMobil Chemical. Le tackifiant naturel peut être le Sylvares TP300 d'Arizona Chemical.

Le LDPE-1 peut être du Riblène MY00 de la société Polimeri Europa, ou de l'Escorene LD 655 d'ExxonMobil.

La cire PE-1 peut être la cire LD Wax 617 A ou la cire LD AC 16 ou la cire AC 617 d'Honeywell. La cire PE-2 peut être une cire oxydée Wax AC 316 ou l'AC 325 d'Honeywell.

L'ionomère peut être un ionomère d'acide acrylique (Aclyn 285) d'Honeywell. L'ionomère peut également être l'ionomère de l'EMAA-1, de l'EMAA-2 ou de l'EAA-1.

Le copolyamide PA-1 peut être l'Euremelt 2840 et le PA-2 de l'Euremelt 2140 d'Huntsman.

L'EVA-1 peut être de l'Escorène 2020, et l'EVA-2 de l'Escorène 53019 d'ExxonMobil chemical ou bien encore de l'Elvax 410 de DuPont ou l'Evatane 18-500 d'Arkema.

Le terpolymère éthylène-acrylate-acide peut être du Bynel 2022 de DuPont. Il se caractérise principalement par son taux d'acide acrylique de 10%. Le terpolymère anhydride-1 peut être le Lotader 3410 d'Arkema qui se caractérise principalement par son taux d'anhydride maléique de 3,1% et accessoirement par son taux d'acrylate de 17%. Le terpolymère anhydride-2 peut être le Lotader 4700 d'Arkema qui se caractérise principalement par son taux d'anhydride maléique de 1,3% et accessoirement par son taux d'acrylate de 29%.

Comme le montre le tableau 11, pour concilier les exigences contradictoires d'un cordon de soudure ayant une bonne adhésion pour un revêtement de sol recouvert d'un vernis, tout en étant résistant aux agressions mécaniques et aux salissures, l'invention propose de façon originale l'emploi d'une composition comprenant un ou plusieurs polymères choisi parmi le groupe des polymères à base d'acide acrylique, d'acide méthacrylique ou d'anhydride maléique.

Les caractéristiques concernant la fluidité d'une série de polymères utilisés dans la présente invention sont représentées dans le tableau 10.

**Tableau 10 : Caractéristiques des constituants des différentes compositions de cordon de soudure.**

| **Composants** | Viscosité (cps) à 140°C | Indice de fluidité (g/10min) | Vinyle Acétate/ou acide (%) |
|---|---|---|---|
| EVA - 1 | | 20 | 20 (VA) |
| EVA - 2 | | 530 | 19 (VA) |
| LDPE - 1 | | 200 | 0 |
| Cire PE - 1 | 180 | | 0 |
| Cire PE - 2 | 8500 à 150°C | | 0 |
| Ionomère (sodium) - 1 | 80000 à 190°C | | - |
| EAA-1 | | 60 | 18 (AA) |
| Copolyamide (haut taux d'amine) - 1 | 18000 à 200°C | | 0 |
| EMAA - 1 | | 450 | 10 (MAA) |
| EMAA - 2 | | 95 | 11 (MAA) |
| Terpolymère (acide ethylène-acrylate acrylique) | | 35 | 10 (AA) |

De préférence, l'indice de fluidité du copolymère choisi parmi le groupe des polymères à base d'acide acrylique, d'acide méthacrylique ou d'anhydride maléique, présente une fluidité supérieure à 100 g/10min, avantageusement supérieure ou égal à 450 g/10min.

### Résultats mesurés sur les cordons selon l'invention

**Tableau 11 : Résultats de tests d'adhérence, de résistance à la griffure et à la salissure des compositions à base d'acide acrylique, méthacrylique, et d'anhydride maléique. Pour le test d'encrassement (salissure sec/eau), 1 signifie très mauvais, 10 très bon. Pour le test du goudron 5 signifie mauvais, 1 signifie bon.**

| **Composition** | **Salissure sec/eau** | **Goudron** | **Adhérence (N/50mm)** | **Griffe (g)** |
|---|---|---|---|---|
| **9** | 5/7 | 2,5 | 300-310 | 650 |
| **10** | 6/7 | 2 | 250-270 | 700 |
| **11** | 6/8 | 2,5 | 300-320 | 800 |
| **12** | 6/9 | 2 | 270-300 | 800 |
| **13** | 5/7 | 2 | 250-300 | 700 |
| **14** | 6/8 | 3 | 170-200 | 900 |
| **15** | 5/7 | 3 | 190-230 | 1000-1200 |
| **16** | 5/6 | 4 | 120-150 | 1000-1200 |
| **17** | 5/5 | 3,5 | 180-220 | 1000 |
| **18** | 5/7 | 3,5 | 290-300 | 1000 |
| **19** | 4/4 | 4 | 270-330 | 1200 |
| **20** | 6/8 | 3 | 250-260 | 1400 |
| **21** | 6/7 | 3,5 | 270-330 | 1400 |
| **22** | 6/8 | 2,5 | 330-375 | 1200 |
| **23** | 5/8 | 2,5 | 320-360 | 1300 |
| **24** | 5/9 | 3 | 180-210 | 1350-1500 |
| **25** | 5/8 | 3 | 300-320 | 1000-1200 |
| **26** | 8/9 | 2 | 300-310 | 1000-1100 |
| **27** | 9/9 | 2 | 300-310 | 1000 |
| **28** | 4/9 | 3,5 | 290-320 | 800 |
| **29** | 4/8 | 3,5 | 300-350 | 800 |
| **30** | 4/8 | 3,5 | 310-340 | 700 |
| **31** | 8/8 | 3 | 300-340 | 750 |
| **32** | 6/8 | 2,5 | 280-340 | 1000 |
| **33** | 5,5/8 | 2 | 330-360 | 850 |
| **34** | 4/7 | 3,5 | 200-250 | 450 |
| **35** | 7/8 | 2,5 | 350-375 | 850 |
| **36** | 6/8 | 2 | 320-350 | 800 |

Les compositions à base de polymère acide, en particulier à base d'EAA (copolymère éthylène-acide acrylique) ou à base d'EMAA (copolymère éthylène-acide métacrylique), ou d'anhydride, en particulier d'anhydride maléique, présentent de meilleures résistances au goudron, aux salissures, et à la griffe, tout en ayant une adhérence similaire ou légèrement meilleure à celle observée pour les compositions à base d'EVA selon l'état de la technique, dans le cas d'une composition ne comprenant qu'un polymère à base d'acide (compositions 14 à 19). Toutefois, les compositions à base de polymère acide ou anhydride, comprenant en outre une cire PE et/ou un tackifiant, présentent des adhérences nettement améliorées. Avantageusement, le tackifiant peut être remplacé par un copolyamide qui permet d'améliorer la résistance au goudron, à la salissure, et à la griffe, une amélioration qu'il n'était pas possible d'obtenir pour les compositions à base d'EVA. Pour les deux polyamides testés, le PA-1 (indice d'amine de 13 et indice d'acide de 2), ou le PA-2 (indice d'amine de 9 et indice d'acide de 2), les résultats obtenus sont sensiblement identiques.

Les groupements acides et ioniques, du ou des polymères utilisés dans la composition du cordon de soudure selon l'invention, permettent de faciliter l'adhésion à chaud de la composition aux éléments de revêtement de surface. De plus, lorsque le cordon de soudure revient à température ambiante, les groupements acides « libres », à savoir ceux n'étant pas impliqués dans le processus d'adhésion, peuvent créer des liaisons hydrogènes entre les macromolécules de polymère, des liaisons qui sont 5 à 10 fois plus fortes que les liaisons Van Der Waals. Ainsi, à température ambiante, ces polymères présentent des caractéristiques mécaniques équivalentes à celles de polymères de poids moléculaires plus élevés. Concernant les liaisons ioniques, les énergies de liaisons sont 10 à 20 fois plus élevées que les liaisons hydrogènes citées précédemment.

Ainsi, de façon surprenante, les polymères ou copolymères acides, et/ou leurs ionomères, permettent de concilier les exigences de fluidité élevée à l'état fondu avec des performances à la salissure et à la griffure améliorées.

L'emploi d'un polymère ou copolymère acide, ou d'un ionomère, présente également l'avantage d'obtenir une adhésion équivalente à celle obtenue pour des compositions à base de polymères acétate, du type EVA par exemple, tout en introduisant un nombre plus restreint de groupements polaires. Ainsi, les groupements polaires du type acétate peuvent être avantageusement remplacés par des groupements acides ou ionomères. En effet, contrairement à un groupement acétate, un groupement acide ou ionomère peut interagir fortement avec les nombreux groupements fonctionnels acides ou ioniques, du ou des composants des revêtements de surface, ou même avec des groupements basiques (par exemple les charges minérales), ces interactions étant plus fortes que les interactions dipolaires que peuvent apporter les groupements acétate.

Ainsi, les cordons de soudure thermofusibles selon l'invention sont moins sensibles à l'encrassement et présentent l'avantage de pouvoir se nettoyer à l'aide d'un simple chiffon sec.

De préférence, la composition de cordon selon l'invention comprend un polymère acide ayant un taux d'acide entre 10% et 20 %, et avantageusement de 10%. En effet, de manière générale, une composition comprenant un polymère acide ayant un taux d'acide de 10% présente des caractéristiques supérieures à une composition comprenant un polymère acide ayant un taux d'acide de 20%, notamment concernant la résistance au goudron et à la salissure.

Le ou les polymères acides ou anhydrides, éventuellement partiellement neutralisés en ionomère, du cordon selon l'invention représentent entre 12,5% et 70 % en poids, le polyéthylène représentant entre 13 et 80% en poids, et le copolyamide représentant entre 9,5 et 15% en poids, par rapport au poids total des polymères utilisés.

Le ou les polymères selon l'invention peuvent être issus d'une synthèse à catalyse métallocène.

Selon un mode particulier de l'invention, l'un des composants du cordon de soudure est une cire, c'est-à-dire un polymère ayant une viscosité Brookfield inférieure à 10000 mPa.s à 140°C. De préférence, le composant qui se trouve sous la forme d'une cire est le polyéthylène.

De préférence, le cordon de soudure selon l'invention comprend une « cire dite ionomère », c'est-à-dire une cire provenant des précurseurs d'ionomères de fluidité conforme à la définition de la cire comportant des groupements acides ou anhydrides qui peuvent être neutralisés par des cations métalliques. Une fois neutralisée par des ions, la « cire dite ionomère » peut ne plus répondre à la définition d'une cire (viscosité Brookfield inférieure à 10000 mPa.s à 140°C) car la neutralisation des précurseurs d'ionomères entraine une perte de fluidité et donc une augmentation de la viscosité. La « cire dite ionomère » est utilisée pour renforcer le polymère à base d'acide ou d'anhydride, et permet une meilleure homogénéisation de la composition du cordon de soudure selon l'invention.

Afin d'améliorer encore le pouvoir d'adhésion d'un cordon de soudure thermofusible selon l'invention, il est possible, non pas d'additionner des tackifiants (qui dégradent fortement la résistance mécanique et à la salissure d'un cordon de soudure), mais d'additionner un copolyamide. De façon surprenante, les copolyamides permettent d'augmenter l'adhésion d'une composition à base de polymère acide ou ionomère à des éléments de revêtement de surface, et ce malgré le fait que les fonctions amines puissent être théoriquement neutralisées par les groupements acides des copolymères acides ou ionomères, de ce fait, le potentiel d'adhésion apporté par les fonctions amines serait notablement réduit car il ne serait plus disponible pour interagir avec la surface du revêtement de sol.

De préférence, le copolyamide est le produit de la polycondensation d'un dimère d'acides gras et d'une diamine aliphatique. Avantageusement, le copolyamide a un indice d'amine supérieur à l'indice d'acide.

De préférence, le cordon de soudure selon l'invention comprend en outre une cire naturelle, avantageusement de la cire de carnauba ou de la paraffine. De préférence, la cire naturelle représente jusqu'à 20 % en poids supplémentaires par rapport au poids total des polymères utilisés.

Le cordon de soudure selon l'invention peut également comprendre des additifs, dont les proportions dans le cordon de soudure, exprimées en poids pour cent du reste de la composition, sont de préférence inférieures à 25 %. Il peut s'agir par exemple d'un lubrifiant, d'une silicone, de charges minérales, d'antistatiques, de composés anti-UV, antioxydants, des pigments, ou un mélange de plusieurs de ces composés. De préférence, le cordon de soudure comprend au moins un pigment adéquat. Avantageusement, il s'agit par exemple de dioxyde de titane (TiO₂)

En fonction du type de revêtement de sol, il est possible de privilégier soit la facilité de pose ou d'arasement et la facilité d'entretien en adaptant la composition du cordon de soudure thermofusible.

Dans une forme de réalisation particulière, le cordon de soudure thermofusible selon l'invention comprend à la fois un polymère à base d'acide, une cire poly-oléfinique, un ionomère, un copolyamide et un terpolymère acide. Avantageusement, il s'agit de la composition 31 (tableau 6).

Le cordon de soudure selon l'invention peut être obtenu par tout processus adéquat. De préférence, il est obtenu par extrusion.

Le cordon de soudure selon l'invention peut être utilisé pour joindre tout type de revêtement de surface, en particulier des revêtements de sol, et plus particulièrement des revêtements de sol à base de linoléum, à base de polyoléfine, à base de PVC ou à base de caoutchouc.

De préférence, les revêtements de surface à base de polyoléfine sont des revêtements dont la nature et la structure sont décrites dans le document EP1567336. En particulier, il s'agit de revêtements multicouches comprenant une couche substrat à base de polymère oléfinique, une couche intermédiaire à base d'un polymère issu d'une synthèse métallocène et une couche d'usure à base d'un polymère de type ionomère et qui peut comprendre en outre un couche superficielle en polyuréthane.

De préférence, les revêtements à base de caoutchouc sont des revêtements dont la nature et la structure sont décrites dans la demande de brevet européen n° 07000622.6. En particulier, il s'agit de revêtements à base d'un mélange de SBS (styrène butadiène styrène), de SBR (copolymère de butadiène et de styrène comprenant moins de 40% en poids de styrène) ou de NBR (caoutchouc nitrile butadiène), et de HSR (copolymère de styrène et de butadiène ayant un contenu élevé en styrène), et qui peut comprendre en outre un polymère ionomère.

Les revêtements de surface, en particulier les revêtements de sol, quelque soit leur nature, qui sont joints à l'aide du cordon de soudure thermofusible selon l'invention, peuvent comprendre en outre des additifs et/ou des charges minérales ou ignifuges, par exemple de l'hydrate d'alumine la craie, la calcite, le kaolin, la dolomie, la silice, les silicates ou hydroxyde de magnésium.

## Revendications

1. Cordon de soudure thermofusible pour joindre des éléments de revêtement de sol comprenant les résines suivantes :
- au moins un copolymère choisi parmi le groupe formé par les polymères à base d'acide acrylique, d'acide méthacrylique et d'anhydride maléique,
- une cire polyéthylène,
- un copolyamide, produit de la condensation d'un dimère d'acides gras et d'une diamine aliphatique,
**caractérisé en ce que** le cordon de soudure comprend :
- entre 40% et 74% en poids d'un copolymère choisi parmi le groupe formé par les polymères à base d'acide acrylique, d'acide méthacrylique et d'anhydride maléique,
- entre 10% et 20% en poids de la cire polyéthylène,
- entre 10% et 15% en poids du copolyamide.

2. Cordon de soudure selon la revendication 1, dans lequel le copolymère, choisi parmi le groupe formé par les polymères à base d'acide acrylique, d'acide méthacrylique et d'anhydride maléique, est partiellement ou entièrement neutralisé pour former un ionomère.

3. Cordon de soudure selon l'une quelconque des revendications précédentes, dans lequel le copolymère, à base d'acide acrylique ou d'acide méthacrylique, comporte un taux d'acide entre 10% et 20% en poids par rapport au poids total des autres co-monomères.

4. Cordon de soudure selon la revendication 3, dans lequel le copolymère, à base d'acide acrylique ou d'acide méthacrylique, comporte un taux d'acide de 10% en poids par rapport au poids total des autres co-monomères.

5. Cordon de soudure selon l'une quelconque des revendications précédentes, dans lequel le copolymère, à base d'anhydride maléique, a un taux d'anhydride compris entre 1,3% et 3,1% en poids par rapport au poids total des autres co-monomères.

6. Cordon de soudure selon l'une quelconque des revendications précédentes, dans lequel le copolymère, choisi parmi le groupe formé par les polymères à base d'acide acrylique, d'acide méthacrylique et d'anhydride maléique, est un terpolymère.

7. Cordon de soudure selon l'une quelconque des revendications précédentes, dans lequel le copolyamide a un indice d'aminé supérieur à l'indice d'acide.

8. Cordon de soudure selon l'une quelconque des revendications précédentes, qui comprend en outre une cire de carnauba ou une cire de paraffine.

9. Revêtement de sol comportant une soudure réalisée avec le cordon de soudure selon l'une quelconque des revendications 1 à 8.

10. Utilisation du cordon de soudure selon l' une quelconque des revendications 1 à 8 pour joindre des éléments de revêtement de sol choisis parmi le groupe formé par les revêtements de sol à base de polyoléfine, les revêtements de sol à base de PVC, les revêtements de sol à base de Linoléum, et les revêtements de sol à base de caoutchouc.

## Patentansprüche

1. Heißschmelz-Schweißdraht zum Verbinden von Bodenbelagselementen, der die folgenden Harze aufweist:
- mindestens ein Copolymer, ausgewählt aus der Gruppe bestehend aus Polymeren auf Acrylsäurebasis, Methacrylsäurebasis und Maleinsäureanhydridbasis,
- ein Polyethylenwachs,
- ein Copolyamid, das ein Kondensationsprodukt eines Fettsäuredimers und eines aliphatischen Diamins ist, **dadurch gekennzeichnet, dass** der Schweißdraht aufweist:
- zwischen 40 Gew.-% und 74 Gew.-% eines Copolymers, ausgewählt aus der Gruppe bestehend aus Polymeren auf Acrylsäurebasis, Methacrylsäurebasis und Maleinsäureanhydridbasis,
- zwischen 10 Gew.-% und 20 Gew.-% Polyethylenwachs,
- zwischen 10 Gew.-% und 15 Gew.-% Copolyamid.

2. Schweißdraht nach Anspruch 1, wobei das Copolymer, ausgewählt aus der Gruppe bestehend aus Polymeren auf Acrylsäurebasis, Methacrylsäurebasis und Maleinsäureanhydridbasis, teilweise oder vollständig neutralisiert ist, um ein Ionomer zu bilden.

3. Schweißdraht nach einem der vorhergehenden Ansprüche, wobei das Copolymer auf Acrylsäure- oder Methacrylsäurebasis eine Säurekonzentration zwischen 10 Gew.-% und 20 Gew.-%, bezogen auf das Gesamtgewicht der anderen Comonomere, aufweist.

4. Schweißdraht nach Anspruch 3, wobei das Copolymer auf Acrylsäure- oder Methacrylsäurebasis eine Säurekonzentration von 10 Ges.-%, bezogen auf das Gesamtgewicht der anderen Comonomere, aufweist.

5. Schweißdraht nach einem der vorhergehenden Ansprüche, wobei das Copolymer auf Maleinsäureanhydridbasis eine Anhydridkonzentration zwischen 1,3 Gew.-% und 3,1 Gew.-%, bezogen auf das Gesamtgewicht der anderen Comonomere, aufweist.

6. Schweißdraht nach einem der vorhergehenden Ansprüche, wobei das Copolymer, ausgewählt aus der Gruppe bestehend aus Polymeren auf Acrylsäurebasis, Methacrylsäurebasis und Maleinsäureanhydridbasis, ein Terpolymer ist.

7. Schweißdraht nach einem der vorhergehenden Ansprüche, wobei das Copolyamid eine Aminzahl aufweist, die größer ist als seine Säurezahl.

8. Schweißdraht nach einem der vorhergehenden Ansprüche, der ferner ein Carnaubawachs oder ein Paraffinwachs aufweist.

9. Bodenbelag, der eine Schweißnaht aufweist, die mit dem Schweißdraht nach einem der Ansprüche 1 bis 8 hergestellt ist.

10. Verwendung des Schweißdrahts nach einem der Ansprüche 1 bis 8 zum Verbinden von Bodenbelagselementen, ausgewählt aus der Gruppe bestehend aus Bodenbelägen auf Polyolefinbasis, Bodenbelägen auf PVC-Basis, Bodenbelägen auf Linoleumbasis und Bodenbelägen auf Kautschukbasis.

## Claims

1. Hot-melt welding rod for joining flooring elements comprising the following resins:
- at least one copolymer chosen from the group formed by polymers based on acrylic acid, on methacrylic acid and on maleic anhydride,
- a polyethylene wax,
- a copolyamide, the product of the condensation of a fatty acid dimer and of an aliphatic diamine,
**characterized in that** the welding rod comprises:
- between 40% and 74% by weight of a copolymer chosen from the group formed by polymers based on acrylic acid, on methacrylic acid and on maleic anhydride,
- between 10% and 20% by weight of the polyethylene wax,
- between 10% and 15% by weight of the copolyamide.

2. Welding rod according to Claim 1, in which the copolymer chosen from the group formed by polymers based on acrylic acid, on methacrylic acid and on maleic anhydride is partially or completely neutralized to form an ionomer.

3. Welding rod according to either one of the preceding claims, in which the copolymer based on acrylic acid or on methacrylic acid comprises a content of acid between 10% and 20% by weight, with respect to the total weight of the other comonmers.

4. Welding rod according to Claim 3, in which the copolymer based on acrylic acid or on methacrylic acid comprises a content of acid of 10% by weight, with respect to the total weight of the other comonomers.

5. Welding rod according to any one of the preceding claims, in which the copolymer based on maleic anhydride has a content of anhydride of between 1.3% and 3.1% by weight, with respect to the total weight of the other comonomers.

6. Welding rod according to any one of the preceding claims, in which the copolymer chosen from the group formed by polymers based on acrylic acid, on methacrylic acid and on maleic anhydride is a terpolymer.

7. Welding rod according to any one of the preceding claims, in which the copolyamide has an amine number which is greater than the acid number.

8. Welding rod according to any one of the preceding claims, which additionally comprises a carnauba wax or a paraffin wax.

9. Flooring comprising a weld produced with the welding rod according to any one of Claims 1 to 8.

10. Use of the welding rod according to any one of Claims 1 to 8 for joining flooring elements chosen from the group formed by polyolefin-based floorings, PVC-based floorings, linoleum-based floorings and rubber-based floorings.
